# EUROPEAN PATENT APPLICATION

(11) **EP 2 364 032 A2**
(43) Date of publication of application: **07.09.2011**
(21) Application number: 11155102.4
(22) Date of filing: 18.02.2011
(51) Int. Cl.: H04N 13/00

(54) **Impairments to 3D Experiences**

(30) Priority: 02.03.2010 US 715513
(71) Applicant: Comcast Cable Communications, LLC, Philadelphia, PA 19103 (US)
(72) Inventor: Gilson, Ross, Philadelphia, PA 19146 (US)
(74) Representative: Wallin, Nicholas James

(57) **Abstract**

Systems and methods for impairing video content to a user are described. Video content may be outputted to a user via at least one output device. Such video content may be video content associated with a video game. A determination may be made as to whether a simulated impairment to the video content is required. Upon determining that a simulated impairment is required, impaired video content may be outputted to the user via the at least one output device. The at least one output device may include an output device for the left eye of the user and an output device for the right eye of the user. The impaired video content then may outputted to the output device for the left eye while the video content, without simulated impairment, may be outputted to the output device of the right eye.

## Description

### BACKGROUND

Whether one is watching a movie, playing a video game, or participating in a simulated training scenario, the use of three dimensional (3D) technology creates a vastly different experience in comparison to a two dimensional (2D) environment. Current 3D technology allows a user to appear to see three dimensions with respect to a simulated picture on a 2D environment, such as a computer screen. Yet current 3D technology in these areas is limited as everything projected to a user remains in 3D.

### SUMMARY

In light of the foregoing background, the following presents a simplified summary of the present disclosure in order to provide a basic understanding of some features of the disclosure. This summary is provided to introduce a selection of concepts in a simplified form that are further described below. This summary is not intended to identify key features or essential features of the disclosure.

Systems and methods for hindering three dimensional (3D) content provided to a user are described. Current 3D technology systems fail to account for certain scenarios where a user would only use one eye. In addition, current 3D technology systems fail to impair one eye of a user with different content than another eye. Systems and methods that provide hindered 3D content to a user may provide a more realistic user experience.

Impairments such as blacking out one eye, blacking out alternating eyes, sending both eyes the same content, i.e., forcing 2D, sending one eye a solid color, closing both shutters on an active system so both eyes see black, and sending one eye a blurred image may allow a viewer to receive a more realistic image depending on the scenario. Video content may be outputted to a user via at least one output device. Such video content may be video content associated with a video game. A determination may be made as to whether a simulated impairment to the video content is required. Upon determining that a simulated impairment is required, impaired video content may be outputted to the user via the at least one output device. The at least one output device may include an output device for the left eye of the user and an output device for the right eye of the user. The impaired video content then may outputted to the output device for the left eye while the video content, without impairment, may be outputted to the output device of the right eye.

### BRIEF DESCRIPTION OF THE DRAWINGS

Some embodiments of the present disclosure are illustrated by way of example, and not by way of limitation, in the figures of the accompanying drawings and in which like reference numerals refer to similar elements.

FIG. 1 is an illustrative schematic diagram of a general-purpose digital computing environment in accordance with one or more features of the disclosure herein;

FIG. 2 is another illustrative schematic diagram of a general-purpose digital computing environment in accordance with one or more features of the disclosure herein;

FIG. 3 is an illustrative block diagram of an active three dimensional impairment system in accordance with one or more features of the disclosure herein;

FIG. 4 is an illustrative block diagram of a passive three dimensional impairment system in accordance with one or more features of the disclosure herein; and

FIGS. 5-7 are illustrative flowcharts of methods for impairing content to a user in accordance with one or more features of the disclosure herein.

### DETAILED DESCRIPTION

In the following description of the various embodiments, reference is made to the accompanying drawings, which form a part hereof, and in which is shown by way of illustration various embodiments in which features may be practiced. It is to be understood that other embodiments may be utilized and structural and functional modifications may be made.

The disclosed embodiments may be used, for example, with numerous general purpose or special purpose computing system environments or configurations. Examples of well known computing systems, environments, and/or configurations that may be suitable for use with features described herein include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

Some disclosed features may be described in the general context of computer-executable instructions, such as program modules, being executed by a computer. Generally, program modules include routines, programs, objects, components, data structures, etc. that perform particular tasks or implement particular abstract data types. Features herein may also be practiced in distributed computing environments where tasks are performed by remote processing devices that are linked through a communications network. In a distributed computing environment, program modules may be located in both local and remote computer storage media including memory storage devices.

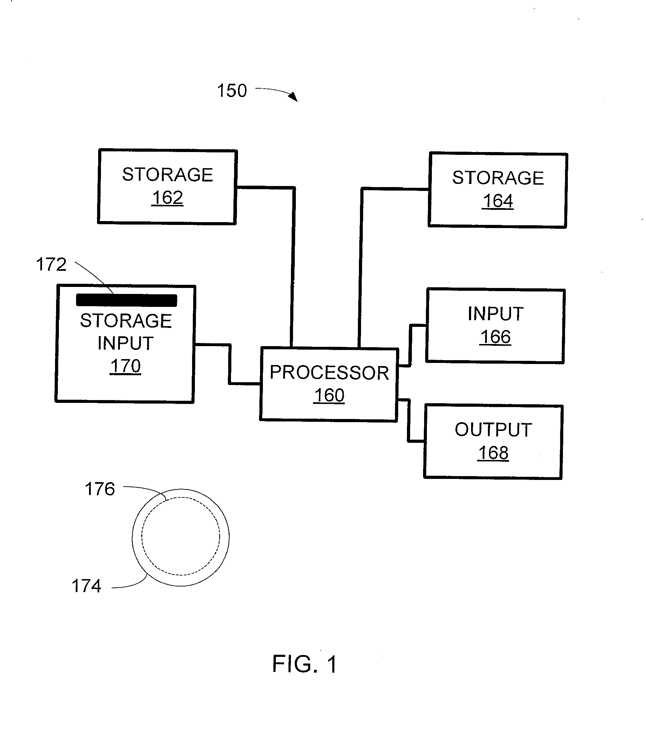

One or more aspects of the present disclosure may be implemented as part of computer software on a conventional or special purpose computer system. Referring now to FIG. 1, a conventional computer system 150 for practicing aspects of the present disclosure is shown. Processor 160 may retrieve and execute software instructions stored in storage 162 such as memory, which may be Random Access Memory (RAM), and may control other components to perform one or more aspects of the present disclosure. Storage 162 may be used to store program instructions or data or both. Storage 164, such as a computer disc drive or other nonvolatile storage, may provide storage of data or program instructions. In one embodiment, storage 164 provides longer term storage of instructions and data, with storage 162 providing storage for data or instructions that may only be required for a shorter time than that of storage 164. Input device 166, such as a sensor, computer keyboard, mouse or one or more other devices, may allow user input to the system 150. Output 168, such as a display or printer, may allow the system to provide information such as instructions, data or other information to the user of the system 150, or to another system.

Storage input device 170, such as a conventional floppy disk drive, a USB drive, or CD-ROM drive, may accept via input 172 computer program products 174 such as a conventional floppy disk or CD-ROM or other nonvolatile storage media that may be used to transport computer instructions or data to the system 150. Computer program product 174 may have encoded thereon computer readable program code devices 176, such as magnetic charges in the case of a floppy disk or optical encodings in the case of a CD-ROM, which are encoded as program instructions, data or both to configure the computer system 150 to operate in accordance with one or more aspects described below.

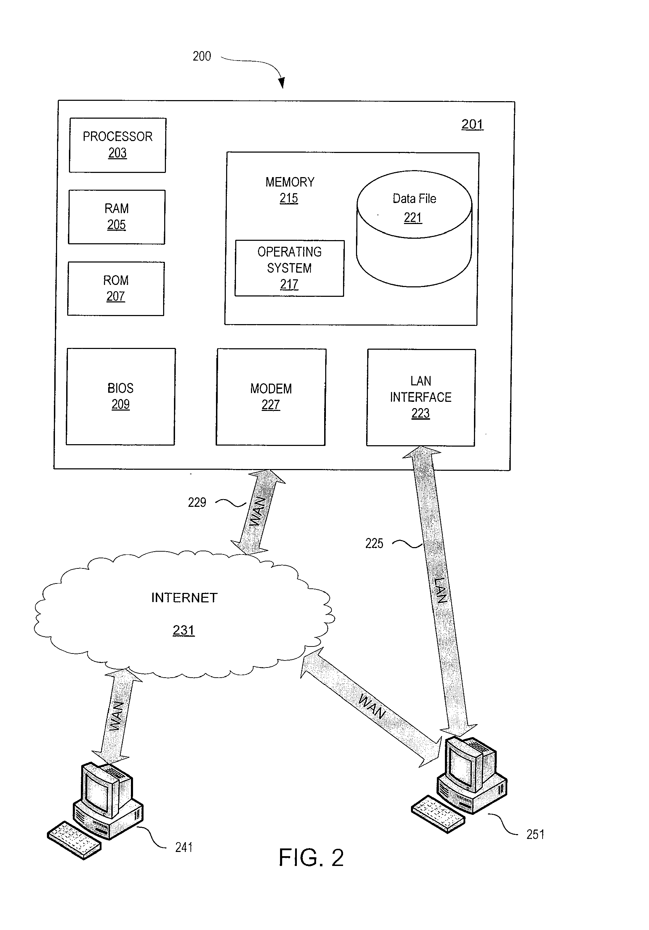

FIG. 2 illustrates an example of a computing system environment 200 that may be used according to one or more aspects of the present disclosure. The computing system environment 200 is only one example of a suitable computing environment and is not intended to suggest any limitation as to the scope of use or functionality of the disclosure. The computing system environment 200 should not be interpreted as having any dependency or requirement relating to any one or combination of the illustrated components.

The present disclosure is operational with numerous other general purpose or special purpose computing system environments or configurations. Examples of well known computing systems, environments, and/or configurations that may be suitable for use with the present disclosure include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The present disclosure may be described in the general context of computer-executable instructions, such as program modules, being executed by a computer. Generally, program modules include routines, programs, objects, components, data structures, etc. that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote computer storage media including memory storage devices.

With reference to FIG. 2, the computing system environment 200 may include a computer 201 having a processor 203 for controlling overall operation of the computer 201 and its associated components, including RAM 205, ROM 207, an input/output module or BIOS 209, and a memory 215. The computer 201 typically includes a variety of computer readable media. The computer readable media may be any available media that may be accessed by the computer 201 and may include both volatile and nonvolatile media and removable and non-removable media. By way of example, and not limitation, computer readable media may comprise computer storage media and communication media.

Computer storage media may include volatile and nonvolatile and removable and non-removable media implemented in any method or technology for storage of information such as computer readable instructions, data structures, program modules, or other data. Computer storage media includes, but is not limited to, random access memory (RAM), read only memory (ROM), electronically erasable programmable read only memory (EEPROM), flash memory or other memory technology, CD-ROM, digital versatile disks (DVD) or other optical disk storage, magnetic cassettes, magnetic tape, magnetic disk storage or other magnetic storage devices, and any other medium that can be used to store the desired information and that can be accessed by the computer 201.

Communication media may embody computer readable instructions, data structures, and program modules. It may also include any information delivery media. Modulated data signal is a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media. Although not shown, RAM 205 may include one or more applications representing the application data stored in RAM 205 while the computer is on and corresponding software applications (e.g., software tasks) are being executed.

The input/output module or BIOS 209 may include a microphone, keypad, touch screen, and/or stylus through which a user of the computer 201 may provide input. The input/output module or BIOS 209 may also include one or more of a speaker for providing audio output and a video display device for providing textual, audiovisual, and/or graphical output.

Software may be stored within memory 215 and/or storage to provide instructions to the processor 203 for enabling the computer 201 to perform various functions. For example, the memory 215 may store software used by the computer 201, such as an operating system 217, and an associated data file 221. Alternatively, some or all of the computer executable instructions for the computer 201 may be embodied in hardware or firmware (not shown).

The computer 201 may operate in a networked environment that supports connections to one or more remote computers, such as computing devices 241 and 251. The computing devices 241 and 251 may be personal computers, gaming machines, or servers that include many or all of the elements described above relative to the computer 201. The network connections depicted in FIG. 2 include a local area network (LAN) 225 and a wide area network (WAN) 229 and may also include other networks. The computer 201 is connected to the LAN 225 through a network interface or adapter 223. The computer 201 may be a server and may include a modem 227 or other means for establishing communications over the WAN 229. For example, the computer 201 may connect to a WAN 229 such as the Internet 231 through a modem connection. One of ordinary skill in the art will appreciate that the network connections may include any communications link between computers.

The existence of any of various well-known protocols such as TCP/IP, Ethernet, FTP, HTTP and the like is presumed, and the system can be operated in a client-server configuration to permit a user to retrieve web pages from a web-based server. Any of various conventional web browsers can be used to display and manipulate data on web pages.

Additionally, an application program may be used by the computer 201 according to an embodiment of the present disclosure. The application program may include computer executable instructions for invoking user functionality related to communication, such as email, short message service (SMS), and voice input and speech recognition applications.

The computing devices 241 or 251 may also be mobile terminals including various other components, such as a battery, speaker, and antennas (not shown). The input/output module or BIOS 209 may include a user interface including such physical components as a voice interface, one or more arrow keys, joystick, data glove, mouse, roller ball, touch screen, or the like.

The computer 201 may include memory 225 for storing computer-readable instructions and a processor 203 for executing the computer-executable instructions. The computer-executable instructions may be a series or sequence of instructions for a computing device that is typically in the form of a programming language such as C++, Java, SQL, or the like. A person of ordinary skill in the art will appreciate that various computer programming languages may be used to create the computer-executable instructions, and the present disclosure is not limited to the programming languages listed above.

The memory 215 may be a portion of the computer 201 that stores data or other instructions. The memory 215 may be retained or lost when power is lost to the system. The memory 215 may provide access to data for a user or computing device 241, 251 to revise and manage a data file 221. These and other aspects of the memory 215 will be apparent to one of ordinary skill in the art in view of the description below.

The processor 203 may be capable of executing the computer-executable instructions. The computer-executable instructions may be executed by the processor 203 after they have been stored in the memory 215. The processor 203 may be a centralized element within a computing system that is capable of performing computations. For example, the processor 203 may perform the computations that are described in the computer-executable instructions and then execute the computer-executable instructions.

The computer-executable instructions may be a series or sequence of instructions for a computing device 241, 251, described in detail throughout this disclosure. The processor 203 may be configured to execute the computer-executable instructions. Such computer-executable instructions may be located (e.g., physically or logically) in modules in the memory 215. The computer network 231 may be any network that interconnects users and/or computing devices 241, 251. According to at least one aspect of the present disclosure, the computer network 231 may provide shared access by two computing devices to at least a portion of the data in the plurality of modules. Shared access may be two or more computing devices 241, 251 that may be coupled to the computer network 231 and/or that may be able to communicate with each other and/or access, change, and add data to a data file 221.

A computer network such as the Internet 231 provides access to the date file 221 that may be shared between the computing devices 241, 251. Additionally, the computer network may be public or private and may be wired or wireless. The computing devices 241, 251 that are coupled to the computer network may be any electronic device that is capable of connecting to a computer network and transmitting data over the computer network. Further, the computing devices are capable of receiving data for entry into a data file 221.

Aspects of the disclosure may be described in the general context of computer-executable instructions, such as program modules, executed by one or more computers or other devices. Generally, program modules include routines, programs, objects, components, data structures, etc. that perform particular tasks or implement particular abstract data types. Typically, the functionality of the program modules may be combined or distributed as desired in various embodiments. For example, modules may be logically divided among various files and/or processors. Furthermore, one or more of the modules may be optional and may be omitted in accordance with various embodiments of the disclosure.

Aspects of the disclosure may be described with respect to an active 3D impairment system and a passive 3D impairment system. An active 3D impairment system may allow for separate content outputs to separate eyes of a user by utilizing two separate displays, one for each eye of a user. As such, each eye of the user is presented with a different content of video, such as on a different channel. In an alternative active 3D impairment system, the system may use shutter glasses with frame alternating video. As such, each eye of the user is presented with a content of video but shutters on the headgear glasses of the user alternate blocking one eye from seeing the content for one frame while allowing the other eye to see the content for the one frame and then switching to block the second eye for the next frame of video content while allowing the first eye to see the frame of video content. A passive 3D impairment system may use filters at a display to polarize odd/even lines which, when wearing passive type polarized glasses, have an effect of sending each eye half the lines of the video content. As such, with the polarized glasses, the left eye may see the odd lines of the video content and the right eye may see the even lines of the video content.

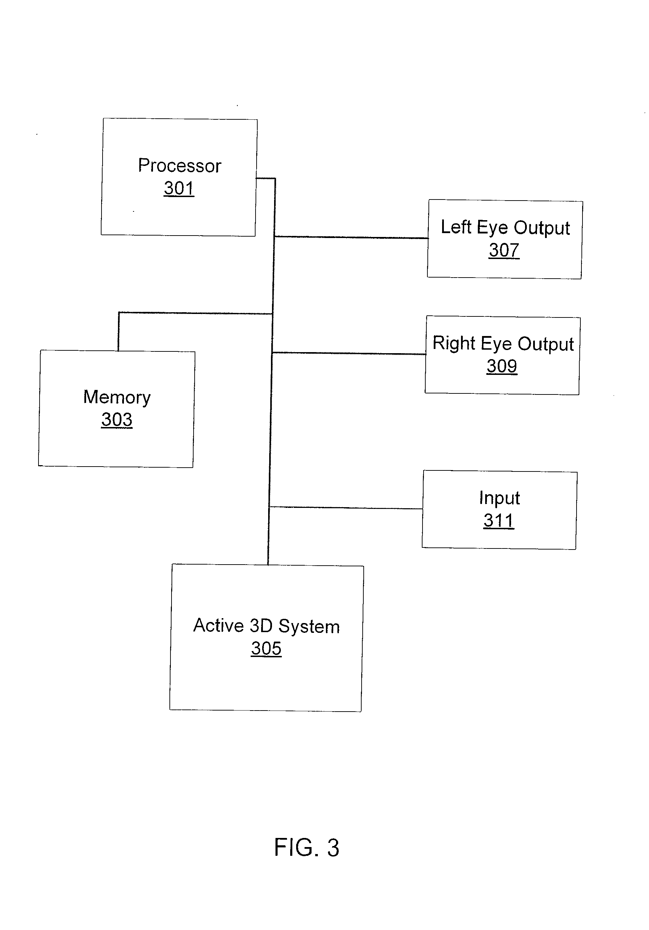

FIG. 3 is an illustrative block diagram of an active three dimensional (3D) impairment system in accordance with one or more features of the disclosure herein. FIG. 3 shows a processor 301. Processor 301 may include one or more features of processor 160 from FIG. 1 and/or one or more features of processor 203 from FIG. 2. FIG. 3 shows a memory 303 operatively connected to processor 301. Memory 303 may include a plurality of memories located in the same physical structure as processor 301 and/or in a different physical structure remote from processor 301. Memory 303 may include one or more features of storage 162, 164, and/or 174 from FIG. 1 and/or one or more features of memory 215, RAM 205, data file 221, and/or ROM 207 from FIG. 2. Memory 303 may include instructions for the processor 301 to perform and/or data for the processor 301 to use in accordance with one or more features described herein. Processor 301 and/or memory 303 may be housed within a single device configured to process and output 3D content to a user.

An active 3D system 305 is shown. Active 3D system 305, processor 301, and/or memory 303 may be housed within a single device configured to process and output 3D content to a user. Such a single device may be included within a television display device and/or some other computer implemented device. In accordance with at least one embodiment, active 3D system 305 may include a piece of headgear equipment, such as goggles, where different content may be supplied to eyes of a user by two different outputs. In another scenario, active 3D system 305 may include a piece of headgear equipment, such as goggles, where shutters on the headgear equipment may alternate, per frame of the video content, between allowing a first eye of the user to see video content for the first frame while not letting the second eye of the user see the content of the first frame and then, for a successive second frame of video content, not allowing the first eye of the user to see the video content for the second frame while allowing the second eye to see the video content of the second frame. In FIG. 3, the two different outputs may be left eye output 307 and right eye output 309. In the example of a piece of headgear equipment, left eye output 307 and right eye output 309 may be two display screens built into the piece of headgear equipment. A number of different headgear devices may be utilized in accordance with the disclosure described herein. For example, various manufactures of head mounted display devices, such as described herein, include Canon, Inc. of O̅ta, Tokyo, Japan, Nintendo Co., Ltd. of Kyoto, Japan, and Sony Corporation of Minato, Tokyo, Japan.

Content intended solely for the left eye of the user may be outputted to left eye output 307 via the display screen in the piece of headgear equipment for the left eye. Content intended solely for the right eye of the user may be outputted to right eye output 309 via the display screen in the piece of headgear equipment for the right eye. One such use may be a first person perspective video game, where a user's character may look through a sight scope of a rifle. In doing such, the image may be confined to the dominant eye of the user, such as the right eye. In such a scenario, active 3D system 305 may allow for content of the scoped image to be outputted to right eye output 309 while outputting a black screen to left eye output 307. By impairing content to the non-dominant eye, such as by sending a black screen as content to the non-dominant eye, a user may be able to see the image associated with the right dominant eye better. Similarly for shutter glasses with frame alternating video content and a single display, the shutters associated with the left eye of the user may close for a first frame of video content while the shutters associated with the right eye of the user may open for the first frame. Then, for a second successive frame of the video content, the shutters associated with the left eye of the user may open for the second frame of video content while the shutters associated with the right eye of the user may close for the second frame.

Additional input, via input 311, from a user or other individual, for example, may be input for use by one or more components described in FIG. 3. For example, a user may specify which eye is dominant. Thereafter, if a video game switches to a mode of operation where only a dominant eye is utilized, and if the user has inputted left eye dominant through input 311, the active 3D system 305 may allow for content to be outputted automatically to left eye output 307, the dominant eye of the user. In other scenarios, the system may blur content to one eye and/or make content sent to one eye solid white. The system may be configured to impair the dominant, and/or non dominant, eye depending on the type of effect the system is trying to create, input 311 may be configured to receive additional input information as well. For example, if a user is playing a video game where the user can experience use of a pair of sunglasses, input 311 may receive an input from the user to put the sunglasses on. Thereafter, output to the left eye output 307 and/or the right eye output 309 may include a shading effect similar to the use of sunglasses.

Input 311 may include physical input components, such as actuation buttons, a keyboard, and/or switches, and may include one or more motion sensors and/or other sensor systems. Input 3111 also may be included as part of a piece of equipment housing the left eye output 307 and the right eye output 309. For example, input 311 may be included, within a head mounted display device that includes two displays, one for each of left eye output 307 and right eye output 309, as one or more inputs for actuation and/or use by a computer and/or user. A motion sensor, for example, may allow for a user to raise her hand as if putting on sunglasses. Then, in detecting such motion, input 311 may provide instructions and/or other data to active 3D system 305 to allow for output to left eye output 307 and/or right eye output 309 of content that correlates to a user wearing a pair of sunglasses. Such functionality may allow for a more realistic experience in a gaming and/or other video environment.

Active 3D system 305 may include shutters and/or other environment restricting components associated with a piece of equipment, such as a piece of headgear equipment. The shutters of the active 3D system 305 may provide additional experiences to a user. For example, such shutters may be configured to restrict all or some light, including ambient light, from a surrounding environment from being seen by the user. Thus, in a gaming experience where the user's character is blindfolded, all light, including ambient light in the room of the user, may be restricted from the user to provide a more realistic experience. Thus, a user playing a video game in a room that receives lots of light from lamps, windows, and ceiling lights, may experience a realistic feeling of being blindfolded since all light is restricted.

In at least one other embodiment, output device 307 and 309 may be configured to maintain shutters for one eye to remain closed thereby restricting a user from receiving video content to the closed shutter eye. One such use may be a first person perspective video game. In such a case, a user's character may look through a sight scope of a rifle. In doing such, the image may be confined to the dominant eye of the user, such as the right eye. In such a scenario, active 3D system 305 may allow for content of the scoped image to be outputted to output 309 and blocking the video content outputted to output 307 by closing the shutters of the glasses for the left eye.

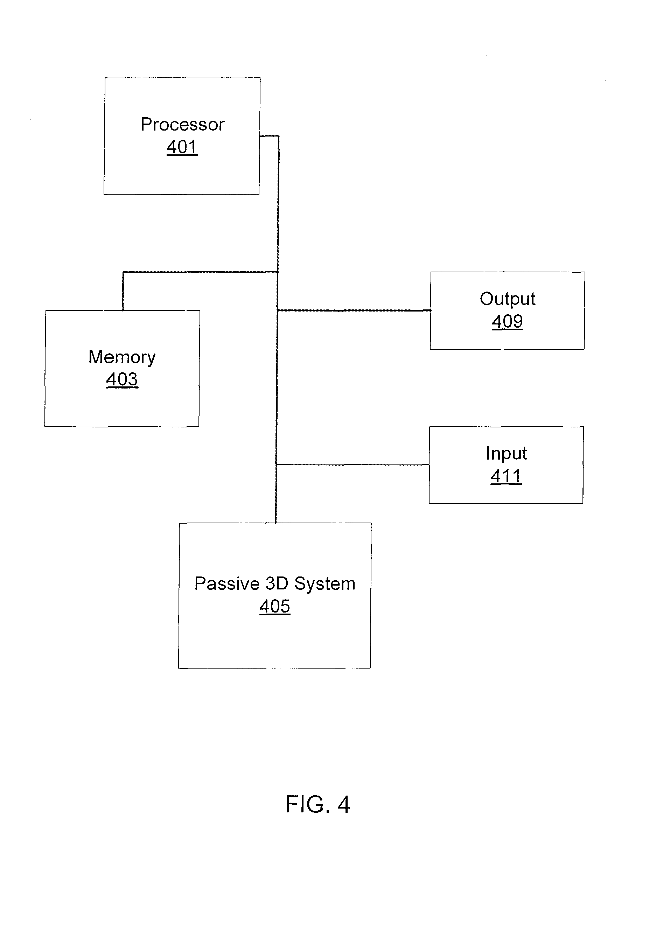

FIG. 4 is an illustrative block diagram of a passive three dimensional (3D) impairment system in accordance with one or more features of the disclosure. FIG. 4 shows a processor 401, which may include one or more features of processor 160 shown in FIG. 1, one or more features of processor 203 shown in FIG. 2, and/or one or more features of processor 301 shown in FIG. 3. FIG. 4 shows a memory 403 operatively connected to processor 401. Memory 403 may include a plurality of memories located in the same physical structure as processor 401 and/or in a different physical structure remote from processor 401. Memory 403 may include one or more features of storage 162, 164, and/or 174 shown in FIG. 1, one or more features of memory 215, RAM 205, data file 221, and/or ROM 207 shown in FIG. 2, and/or one or more feature of memory 303 shown in FIG. 3. Memory 403 may include instructions for the processor 401 to perform operations and/or data for the processor 401 to use in accordance with one or more features described and contemplated herein.

FIG. 4 also shows a passive 3D system. In accordance with at least one embodiment, passive 3D system 405 may include an output device 409, which may be a piece of headgear equipment, such as goggles, where the same content may be supplied to each eye of a user but the content is polarized to have the left eye see something different from the right eye or vice versa. First content intended solely for the left eye of the user may be outputted to output 409 via a display screen, while second content intended solely for the right eye of the user may be outputted to output 409 via the same display screen. The first and second content are outputted to the same display screen simultaneously. A user, wearing a pair of orthogonal polarizing filters, such as in polarized 3D glasses, sees the first content only with the left eye and the second content only with the right eye. The filters of the orthogonal polarizing filters are different filters. Each filter only allows light which is similarly polarized to pass while blocking the orthogonally polarized light, i.e., the light intended for the other eye.

In at least one other embodiment, passive 3D system 405 may use filters at a display to polarize odd/even lines which, when wearing passive type polarized glasses, such as output device 409, have an effect of sending each eye half the lines of the video content. As such, with the polarized glasses, the left eye may see the odd lines of the video content and the right eye may see the even lines of the video content. One such use may be a first person perspective video game. In such a case, a user's character may look through a sight scope of a rifle. In doing such, the image may be confined to the dominant eye of the user, such as the right eye. In such a scenario, passive 3D system 405 may allow for content of the scoped image to be outputted to output 409 by including first content of a black screen for the left eye in the odd lines of the video content and providing second content of the scoped image for the right, dominant eye in the even lines of the video content.

Additional input from a user or other individual may be input for use by one or more components described in FIG. 4 by input 411. For example, a user may specify which eye is dominant. Thereafter, if a video game switches to a mode of operation where only a dominant eye is utilized, if the user has inputted left eye dominant through input 411, the passive 3D system 405 may allow for content to be outputted automatically via different fields of the output to output 409. Input 411 may include one or more features of input 311 described above with respect to FIG. 3.

Whether utilizing a passive or an active 3D impairment system, there may arise a situation where there is a desire to impair content to one or both eyes by having the content downgraded from 3D to 2D. For example, while playing a video game, the character of the user may experience a situation of seeing everything in 2D form. In such a case, simulated impairments such as sending both eyes the same content may be utilized to force 2D to the eye(s) of the user.

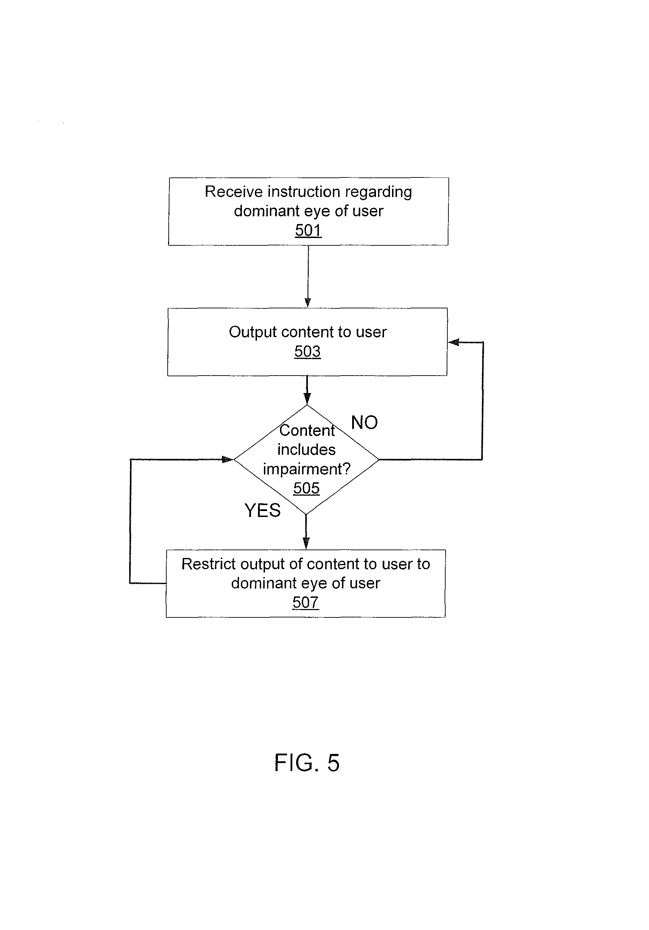

FIG. 5 is an illustrative flowchart of a method for impairing content to a user in accordance with one or more features of the disclosure herein. The process starts and at step 501, an instruction regarding the dominant eye of a user may be received. Such a step may correlate to a user actuating a choice of right eye dominant via input 311 in FIG. 3, for example. In an alternative embodiment, a default setting may be made such as identifying the right eye as dominant. Such a default setting may allow a user still to see content, intended for the dominant eye, in her right eye even if she has not selected which eye is dominant. Proceeding to step 503, content may be outputted to the user. Such a step may correlate to a user playing a video game and receiving output via left eye output 307 and/or right eye output 309 in FIG. 3, for example. The process then proceeds to step 505.

In step 505, a determination may be made as to whether content to output to a user includes some type of simulated impairment on the content and/or the user. In one example, an instruction associated with a video game may indicate that content to be provided is restricted to a dominant eye of the user. If no simulated impairment is determined, the process returns to step 503. If a simulated impairment requirement is detected in step 505, the process moves to step 507 where output of content to the user may be restricted to the dominant eye of the user. With the information received from step 501, for example, the dominant eye of the user may be allowed to receive content while the non-dominant eye may be restricted, in some manner, from receiving content. Following step 507, the process returns to step 505.

The determination in step 505 may be due to the occurrence of an event or in response to exceeding a threshold period of time. Such an event may be an indication to a 3D system that the user should have her view impaired to her dominant eye only. In a video game scenario, such an event may be a user choosing to look through a peep hole of a door. In desiring to look through the peep hole in the video game, in step 505, the determination is made that the user wants to do such and a peep hole view is then sent in step 507. Having returned to step 505, once the user decides to stop looking through the peep hole in the game, this may be determined in step 505 and the user may then be provided content to both eyes in step 503. In this example of looking through a peep hole, the system may send content to the dominant eye of the user and impair the content to the non-dominant eye. As such, a user may experience the sensation of peering through a peep hole by having the content sent to the eye(s) of the user impaired. By impairing content to the non-dominant eye, such as by sending a black image as content to the non-dominant eye, a user may be able to see the image associated with the peep hole view better.

Any of a number of different video content scenarios may be implemented and utilized in accordance herein. In one scenario, when a user would be looking through a scoped weapon, the non-dominant eye may be blacked out, one channel a fully black frame in passive environments or no content in active environments. Such an example may give a more realistic experience of what it looks like to look down a scope. In passive 3D systems, one field may be polarized with a black screen. Although the overall picture for a user may be dimmed, the contrast/brightness configurations of the output display may be increased or adjusted for the other, untouched, polarized field. In active 3D systems, the shutter for the user's non-dominant eye may remain closed for the duration of the scoped scene. The shutter for the dominant eye may remain open. Again, picture/brightness may be adjusted as necessary.

Other scenarios where the implementation in FIG. 5 may be utilized include a first person perspective of an individual/character just waking up or individual/character squinting when walking out in sunlight. In scenarios where forced 2D to a user is preferred, the user need not remove her piece of headgear equipment. In such cases, the same content may be sent to both eyes of the user, such as to left eye output 307 and right eye output 309. If a user did remove her piece of headgear equipment, both eyes would see both fields resulting in an extremely blurry image. Such a scenario may exist for any of a number of reasons, including a desire to have a user only see content in a conventional 2D manner, such as on a television, a desire to place a user in a 2D environment in a video game so the user only sees content in a 2D manner, and/or other reasons.

Another scenario may include a simulated impairment in content where a solid color may be sent to one eye of a user, and the normal frame of the content may be sent to the other eye of the user. This would have a similar affect to "tinting" the entire image, while forcing 2D. In still other scenarios, instead of a solid color sent to one eye of the user, the content to the one eye may be textured for smoke, a rain drop hitting the eye and blurring the image, and/or other similar overlay. Along with taking one eye's image and making it a solid color/texture, that one image also may be further impaired. Examples may include blurring one eye's image slightly, tinting one eye's image red slightly, and applying a blended in texture. In an illustrative video game scenario, if the first person perspective character is wearing glasses and one side of the glasses is cracked, a user may see a crack through that eye. In sill further scenarios, a blurred image may be sent to one eye, whether the dominant or the non dominant eye. Depending on the degree of degradation of the content, some 3D aspects of the content may be maintained in outputting to the user. In an example where a depth field is used, a black or 0 depth may be used for this blurring affect. In another example, the entire depth field may be used for blurring the content to an eye.

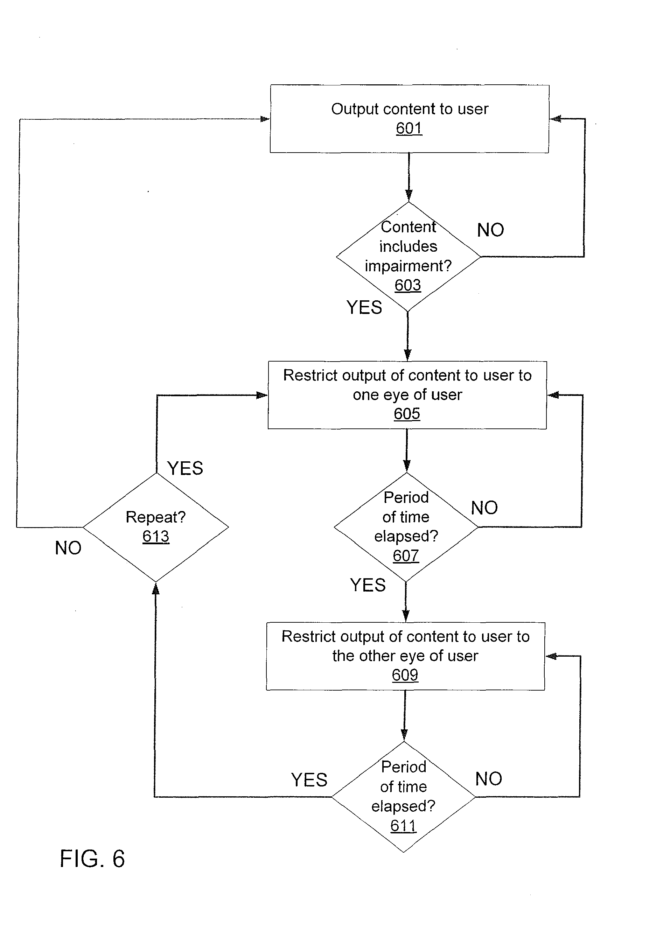

FIG. 6 is an illustrative flowchart of another method for impairing content to a user in accordance with one or more features of the disclosure herein. The process starts and at step 601 content may be outputted to the user. Such a step may correlate to a user playing a video game and receiving output via left eye output 307 and right eye output 309 in FIG. 3. The process then proceeds to step 603, where a determination may be made as to whether content to output to a user includes some type of simulated impairment on the content and/or the user. In one example, an instruction associated with a video game may indicate that content to be provided is restricted to one eye of a user. If no simulated impairment is determined, the process returns to step 601. If a simulated impairment is detected in step 603, the process moves to step 605 where output of content to the user may be restricted to one eye of the user. The one eye of the user may be allowed to receive content while the other eye may be restricted, in some manner, from receiving content.

In step 607, a determination may be made as to whether a period of time as elapsed. If the time period has not elapsed, the process returns to step 605. If the time period has elapsed in step 607, the process moves to step 609 where output of content to the user may be restricted to the other eye of the user than in step 605.

Similar to step 607, in step 611 a determination may be made as to whether a period of time as elapsed. The period of time in step 611 may the same period of time as in step 607 or may be a different period of time. For example, the period of time may be two seconds in step 607 and similarly in step 611 or the period of time may be two seconds in step 607 and three seconds in step 611. If the time period has not elapsed in step 611, the process returns to step 609. If the time period has elapsed in step 611, the process moves to step 613. In step 613 a determination is made as to whether one or more steps of the method may be repeated. If yes, the process returns to step 605. If not, the process returns to step 601. In an alternative embodiment, the determination in step 607 and/or step 611 may be in response to the occurrence of an event.

Implementation of the method in FIG. 6 by a 3D system may be for a portion of video content where the desire is to create a disorienting affect. In a video game scenario, such a scenario may be a user's character is walking through a night club with flashing strobe lights in the outputted content. As a flash of the strobe lights occurs in the content, a first eye of the user may be blackened out with content sent to the second eye, such as in step 605. As described herein, other simulated impairments may be utilized, such as sending a solid color to an eye, sending a texture, and sending a blurred image. After a period of time, such as one second in step 607, the second eye of the user may be blackened out with content sent now to the first eye, such as in step 609. As the user remains in the night club in the video game, the process may repeat through steps 611 and 613. Once the user decides to leave the area with the strobe lights in the video game, the process may return to step 601 and the user may then be provided content to both eyes. Another scenario where the implementation in FIG. 6 may be utilized includes a first person perspective of an individual/character in a video game in a state of shock or in the process of dying.

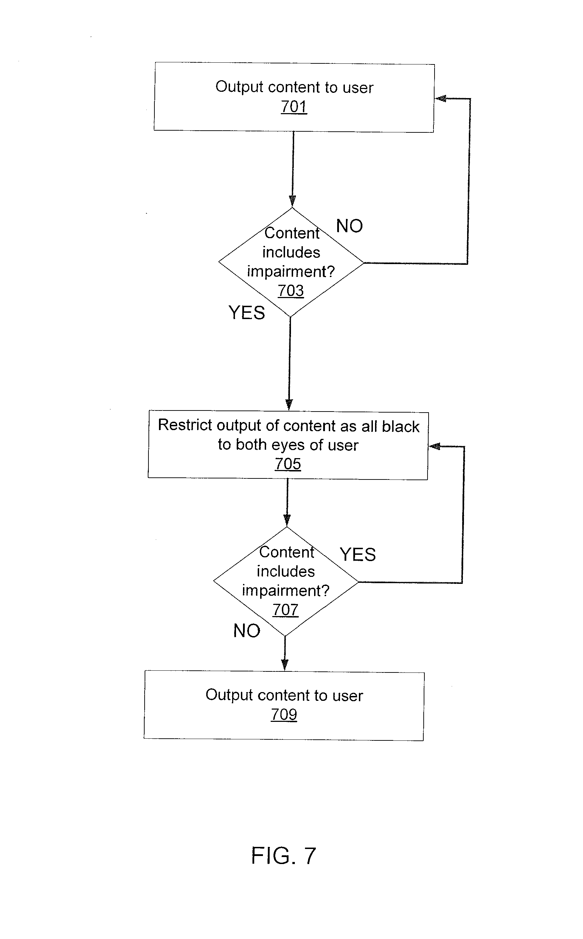

FIG. 7 is an illustrative flowchart of another method for impairing content to a user in accordance with one or more features of the disclosure herein. The process starts and at step 701, content may be outputted to the user. Such a step may correlate to a user playing a video game and receiving output via left eye output 307 and right eye output 309 in FIG. 3. The process then proceeds to step 703.

In step 703, a determination may be made as to whether content to output to a user includes some type of simulated impairment on the content and/or the user. In one example, an instruction associated with a video game may indicate that content to be provided is restricted to create an appearance of being blindfolded. If no simulated impairment is determined, the process returns to step 701. If a simulated impairment is detected in step 703, the process moves to step 705 where output of content to the user may be restricted as all black to both eyes of the user. As such, both eyes of the user may be restricted, in some manner, from receiving content.

Similar to step 703, in step 707, a determination may be made as to whether content to output to a user includes some type of simulated impairment on the content and/or the user. If the simulated impairment is determined, the process returns to step 705. If a simulated impairment is not detected in step 707, the process moves to step 709 where content may be outputted to both eyes of the user without restriction. The determination in step 703 and/or step 707 may be due to the occurrence of an event or in response to exceeding a threshold period of time.

In one scenario for active 3D systems with a piece of headgear equipment, both shutters on the piece of headgear equipment may be closed at the same time. As such, both content light and ambient environmental light where the user is may be prevented and/or restricted from reaching the eyes of the user. Blocking all light may give a feeling of being completely blindfolded while blurring the content and blocking most ambient light may give a feeing of being blindfolded with the feeling of only being able to make out some shapes, like the blindfold not being completely opaque. In movies/games where someone is walking through the dark or has something covering her eyes, such an implementation may provide a more realistic affect since the user would not be able to see much of anything, including the room around the TV, other lights in the viewing room, etc, depending on the quality of the shutters. Still other scenarios include a piece of headgear equipment with different lenses that vary in color. As such, different content may be seen differently by a user's eyes depending on the lenses being utilized.

Other embodiments include numerous variations on the devices and techniques described above. Embodiments of the disclosure include a machine readable storage medium (e.g., a CD-ROM, CD-RW, DVD, floppy disc, FLASH memory, RAM, ROM, magnetic platters of a hard drive, etc.) storing machine readable instructions that, when executed by one or more processors, cause one or more devices to carry out operations such as are described herein. As used herein (including the claims), a machine-readable storage medium is a physical structure that can be touched by a human. A modulated signal would not by itself constitute a machine-readable storage medium.

The foregoing description of embodiments has been presented for purposes of illustration and description. The foregoing description is not intended to be exhaustive or to limit embodiments of the present disclosure to the precise form disclosed, and modifications and variations are possible in light of the above teachings or may be acquired from practice of various embodiments. Additional embodiments may not perform all operations, have all features, or possess all advantages described above. The embodiments discussed herein were chosen and described in order to explain the principles and the nature of various embodiments and their practical application to enable one skilled in the art to utilize the present disclosure in various embodiments and with various modifications as are suited to the particular use contemplated. The features of the embodiments described herein may be combined in all possible combinations of methods, apparatuses, modules, systems, and machine-readable storage media. Any and all permutations of features from above-described embodiments are the within the scope of the disclosure.

## Claims

1. A method comprising:
outputting video content to a user via at least one output device;
determining whether a simulated impairment to the video content is required; and
upon determining that the simulated impairment is required, outputting impaired video content to the user via the at least one output device.

2. The method of claim 1, wherein the at least one output device includes an output device for the left eye of the user and an output device for the right eye of the user, wherein the impaired video content is outputted to one of: the output device for the left eye and the output device of the right eye.

3. The method of claim 2, further comprising outputting the video content to the user via the output device of the right eye of the user when the impaired video content is output to the output device for the left eye of the user.

4. The method of any of claims 1 to 3, further comprising:
determining whether the simulated impairment to the video content is no longer required; and
upon determining that the simulated impairment is no longer required, outputting the video content to the user via the at least one output device.

5. The method of claim 4, wherein the determining whether the simulated impairment to the video content is no longer required includes determining whether a period of time has elapsed.

6. The method of any of claims 1 to 5, further comprising:
determining whether a different simulated impairment to the video content is required; and
upon determining that the different simulated impairment is required, outputting second impaired video content to the user via the at least one output device.

7. A system, comprising:
at least one output device;
at least one processor;
at least one memory including instructions that, when executed by the at least one processor, cause the at least one processor to:
output video content to a user via the at least one output device;
determine whether a simulated impairment to the video content is required; and
upon determining that the simulated impairment is required, output impaired video content to the user via the at least one output device.

8. The system of claim 7, wherein the at least one output device includes an output device for the left eye of the user and an output device for the right eye of the user.

9. The system of claim 8, the instructions further causing the at least one processor to output the video content to the user via the output device of the right eye of the user when the impaired video content is output to the output device for the left eye of the user.

10. The system of any of claims 7 to 9, the instructions further causing the at least one processor to:
determine whether the simulated impairment to the video content is no longer required; and
upon determining that the simulated impairment is no longer required, output the video content to the user via the at least one output device,
wherein the determine whether the simulated impairment to the video content is no longer required includes to determine whether a period of time has elapsed.

11. The system of any of claims 7 to 10, the instructions further causing the at least one processor to:
determine whether a different simulated impairment to the video content is required; and
upon determining that the different simulated impairment is required, output second impaired video content to the user via the at least one output device.

12. The system of any of claims 7 to 11, the instructions further causing the at least one processor to receive data representative of a dominant eye of the user, wherein the impaired video content is output to the dominant eye of the user via the at least one output device.

13. One or more computer-readable medium comprising computer-executable instructions that, when executed by one or more processors cause the one or more processors to perform a method including:
outputting video content to a user via at least one output device;
determining whether a simulated impairment to the video content is required; and
upon determining that the simulated impairment is required, outputting impaired video content to the user via the at least one output device

14. The one or more computer-readable medium of claim 13, wherein the at least one output device includes an output device for the left eye of the user and an output device for the right eye of the user, wherein the impaired video content is outputted to one of: the output device for the left eye and the output device of the right eye.

15. The one or more computer-readable medium of claim 14, the method further comprising outputting the video content to the user via the output device of the right eye of the user when the impaired video content is output to the output device for the left eye of the user.
